# EUROPEAN PATENT SPECIFICATION

(11) **EP 3 332 141 B1**
(45) Date of publication and mention of the grant of the patent: **25.09.2019**
(21) Application number: 16753291.0
(22) Date of filing: 01.08.2016
(51) Int. Cl.: F16D 28/00, F16D 48/06, F16D 13/18, H01P 1/06

(54) **ROTATING SHAFT DEVICE**
DREHWELLENVORRICHTUNG
DISPOSITIF À ARBRE TOURNANT

(30) Priority: 03.08.2015 IT UB20152805
(43) Date of publication of application: 13.06.2018
(73) Proprietor: PIAGGIO & C. S.p.A., 56025 Pontedera (Pisa) (IT)
(72) Inventor: NUTI, Luca, 56025 Pontedera (PI) (IT); CANTINI, Jury, 56025 Pontedera (PI) (IT); MILANI, Jeanpaul, 56025 Pontedera (PI) (IT)
(74) Representative: De Bortoli, Tiziano
(86) International application number: PCT/EP2016/068340
(87) International publication number: WO 2017/021374

(56) References cited:
- EP-A1- 1 826 443
- EP-A1- 2 849 284
- JP-A- 2011 106 564
- US-B1- 6 771 031

## Description

The present invention has as subject a rotating shaft device comprising driving means integral to one or more rotating shafts, requesting to be driven with a signal and fed with energy. Such a device is known from US 6771031 B1.

An example, even if offered as not limitative example, can be constituted by a synchronizer for a speed transmission which can be used aboard a vehicle, in particular a motorcycle, wherein the synchronization is not controlled with passive type systems which automatically activate themselves at a certain rotation regime, for example a centrifugal synchronizer, or which is not mechanically driven from the outside.

The most apparent problem of an actuation integral to a rotating shaft lies in providing an activation signal to a unit controlling the actuation, which cannot be connected to a wiring.

The signal can be however transferred in many ways, for example with sliding contacts or by means of electromagnets on the reinforcement of the rotating shaft device, wherein variations in the magnetic field can be detected by sensors provided on the rotating shaft, but these systems have structural complexities which can prevent an easy planning thereof.

The technical problem underlying the present invention is to provide a rotating shaft device allowing to obviate the drawback mentioned with reference to the known art. Such problem is solved by a device as specified above, defined in the enclosed claim 1.

The main advantage of the rotating shaft device according to the present invention lies in the fact of exploiting the rotating shaft supporting the driving means substantially as wave guide, with an antenna lying in the ideal position to receive signals without being affected by the rotation regime.

The present invention will be described hereinafter according to a preferred embodiment example thereof, provided by way of example and not with limitative purpose by referring to the enclosed drawings wherein:
* figure 1 shows an axonometric view of a rotating shaft device, in particular a synchronizer, according to the present invention;
* figure 2 shows a longitudinal section of the synchronizer of figure 1;
* figure 3 shows a first cross and partial section of the synchronizer in figure 1, according to the section plane A-A of figure 2;
* figure 4 shows a second complete cross section of the synchronizer in figure 1, according to the section plane B-B of figure 2;
* figure 5 shows an operation scheme of the device according to the invention; and
* figure 6 shows an axonometric view of an applicative detail of the device.

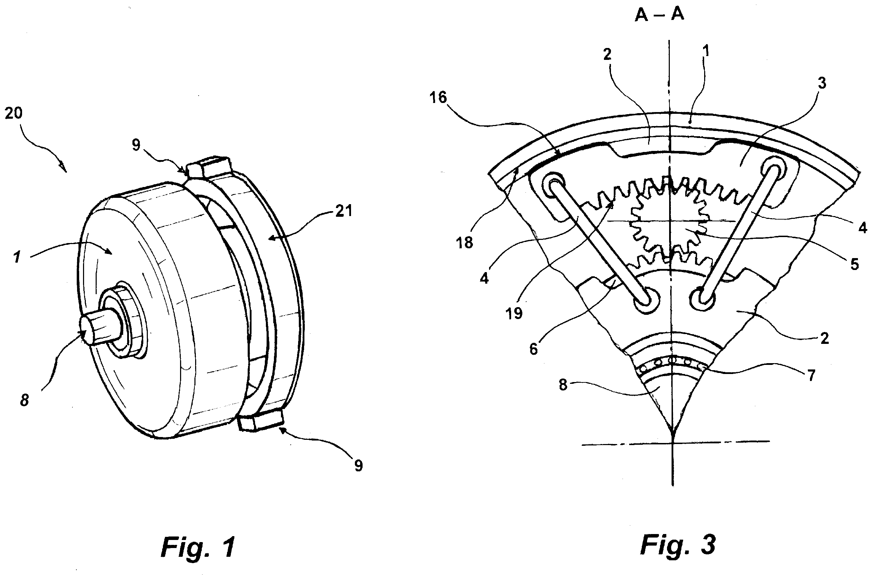

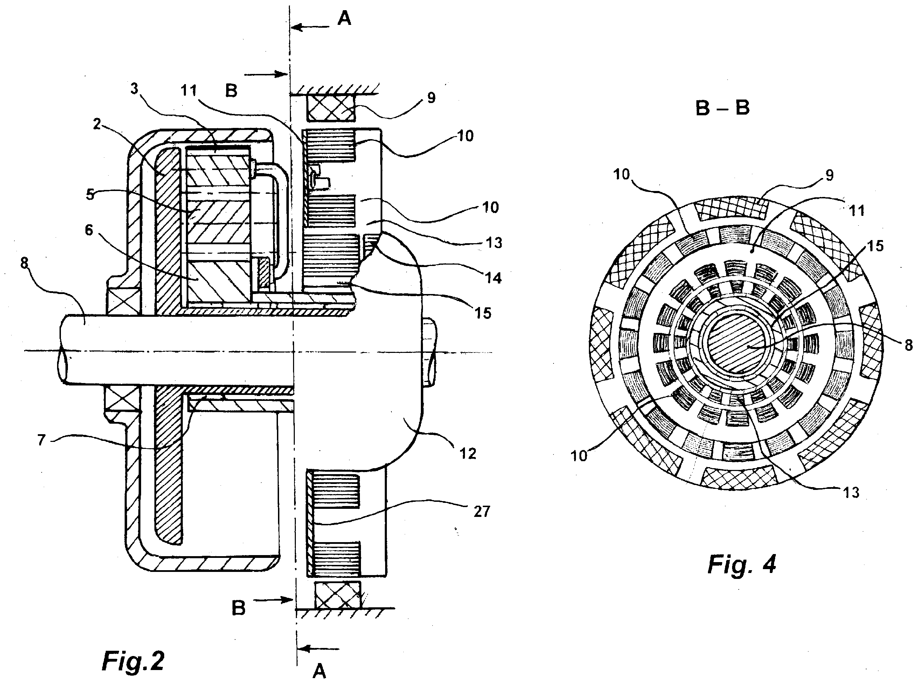

By referring to figures 1 to 4, a synchronizer, designated as a whole with 20, will be described hereinafter by way of example of a rotating shaft device having actuating means with an integrated board and a control and driving unit integral with the rotating shaft thereof, without direct power supply and a wire connection system to send signals to the control and driving unit.

The herein described synchronizer is of actuated type, that is it is of the type exercising the synchronization function thereof when it receives an outer driving control regardless the operation conditions thereof, in particular from the rotation regime thereof, to allow a control logic of the transmission wherein it is inserted and/or the driver to decide when a transmission ratio is to be synchronized in relation to a speed change. Such synchronizer then is different from the synchronizers automatically actuating a synchronization upon occurring certain conditions relating the operation parameters thereof.

What described hereinafter can be applied not only to this synchronizer example, but to any actuated synchronizer, as well as to any rotating shaft device comprising driving means which is dragged by a respective rotating shaft and which requests to be driven by a control logic and/or by an operator by means of sending control signals and in case receiving status signals or other.

The synchronizer 20 of the present example comprises a rotating primary shaft 8, whereon a supporting element 2 is assembled, with a roller conveyor 7 interposing therebetween, and thereupon a bell-shaped member 1 of the synchronizer overlaps. In this way, the supporting element 2 is revolvingly assembled on the primary shaft 8.

The supporting element 2 has the shape of a plate extending radially from the primary shaft 8 and it is housed within in the bell-shaped member 1, which has a friction inner cylindrical surface, coaxial to the primary shaft 8.

By referring to figure 3, on the supporting element 2 a first rack 6 is provided, dragged thereby in rotation. On the rack 5 a gear 5 is engaged which, in turn, engages in a second rack 19 formed on the inner face of a shoe 3. It has a circular profile which, under normal conditions, is flush with the outer edge of the supporting element 2 therefrom it does not project; therefore it is circumscribed within and contained inside the outer edge of the supporting element 2, not being able to interfere, under normal conditions, with the bell-shaped member 1.

The shoe 3 has an elongated shape and it has an outer face acting like a friction surface as it is faced towards the inner cylindrical surface 18 of the bell-shaped member 1.

Such outer surface comprises a pair of linings 16, implemented by a coating made of suitable material at the shoe ends. It is to be meant that the two friction surfaces formed on the linings 16 are suitable to implement a sliding friction with the inner cylindrical surface 18 of the bell-shaped member 1, capable of slowing down the rotation of the bell-shaped member 1 with respect to the supporting element 2.

Under normal conditions, the friction surface formed on each lining 16 and the inner cylindrical surface 18 of the bell-shaped member 1 do not touch, as the whole shoe 3 is included inside the supporting element thereof 2.

The shoe 3 is constrained to the supporting element 2 thanks to a pair of jointed arms 4: they are hinged to the ends of the first rack 6 and to the ends of the shoe 3 so as to form therewith a jointed quadrilateral the arms 4 thereof are the levers. They have a wide apart arrangement and show a greater tilting than the radius passing through the joint thereof next to the rotation axis. The value of this tilting could be comprised between 0° and 20°, according to the sensibility which one wants to provide to the friction system.

It is to be noted, in fact, that by moving one of the arms by a certain angle both in clockwise direction and in the counter clockwise one, the shoe 3 assumes a position which does not follow any more the outer circular profile of the supporting element 2, but one of the ends thereof projects therefrom, by interfering with the inner cylindrical surface 18 of the bell-shaped member 1.

The rotation of the arms 4 then determines a translation of the side shoe 3 with respect to the rest position thereof, which is determined by the centrifugal force acting thereon.

This shifting then represents a deviation from an equilibrium position, and it can be caused by means for translating the shoe 3 which will be described hereinafter. It is to be noted that, due to the effect of the arms 4, the shoe 3 is obliged to follow a predefined trajectory which causes the interference thereof with the inner cylindrical friction surface of the bell-shaped member 1 in both rotation directions of the arms 4.

In the present example, the shifting can be caused by a rotation of the gear 5, which is capable of moving laterally the shoe 3, by intervening on the second rack thereof 19, with respect to the first rack 6 which is integral with the supporting element 2.

The gear 5, which will be actuated in rotation in the way which will be described hereinafter, and the first rack 6 constitute said means for translating laterally the shoe 3.

The synchronizer 20 then allows the motion transmission from the primary shaft 8 to the bell-shaped member 1, by using actuation means which does not depend upon the rotation speed of the shaft itself. In other words, said actuation does not depend upon the occurrence of a certain predetermined rotation regime, but it can be controlled in any moment.

The particular system is integrating portion of a speed transmission allowing the possibility of selecting each gear in any moment, by guaranteeing as additional feature the fact of being able to exploit the exhaust brake effect independently from the engaged gear and independently from the engine regime.

Then, in a speed transmission using such synchronizer, the gear is selected by the driver or by a servo system by keeping into account several operating parameters and not only by basing upon the rotation regime.

In the equilibrium configuration of the system, the shoe 3 and the first rack 6 rotate with the same angular speed, and even the gear placed therebetween rotates at the same speed and remains in central position with respect to the arms 4.

However, it can work as planetary arrangement if it is controlled in rotation.

Since the trajectory of the gear 5 does not develop along an arc of circle, the toothed profiles of the shoe 3 on the inner face thereof and of the rack 6 should have a suitable development, as well as a clearance allowing the shoe to translate without causing the jamming of the gear 5.

The synchronizer 20 comprises a carter 21 coupled to the bell-shaped member 1 so as to create a substantially closed space. On the carter 21, that is on an inner cylindrical surface thereof, a plurality of magnets 9, of permanent type, is provided, radially positioned with respect to the driving axle.

The carter 21 further includes an axial flow electric motor 12, of the stepping type, assembled coaxially to the primary shaft 8 and rotating therewith: it comprises a stator 13 and a rotor 14 faced one onto the other one. On the rotor 14 a grooved profile 15 is provided which will guarantee the rotation of the gear 5 relatively to the primary shaft 8.

In this solution, the rotation speed and the related correct positioning of the elements have to be known accurately. The speed and consequently the rotation angle are detected by using the magnetic induction produced by said plurality of magnets 9, integral with the carter 21 also including electrical windings 10.

Due to the effect of the magnetic induction in the windings 10 an alternating current will be produced inside thereof.

The device, at last, includes a printed circuit board 11 wherein some components are implemented, thereamong an AC/DC converter, which rectifies and modulates suitably the current necessary to feed the stepping motor 12 produced by the windings 10, and a control and power supply unit, that is a remotely-controlled activating system, capable of receiving signals from outside the carter 21 and of converting them in controls to rotate the rotor 14 of the electric motor 12 in reply to a signal.

To this regard, the electric motor 12 constitutes in this example means for actuating the rotating shaft device, which also comprises an integrated control and power supply unit, as described previously, in the board 11.

This type of solution, with power supply and control implemented directly on a printed circuit board assembled in the stepping motor, allows eliminating any sliding contact, with considerable simplifications in terms of layout and reliability. However, the activation signal, both coming from the driver and coming from a slaved control unit, has to be transmitted to the stepping motor.

To this regard, in the electronics implemented on the board 11 a receiver should be present capable of receiving and correctly interpreting the signal, by controlling suitably and in real time, the stepping motor 12.

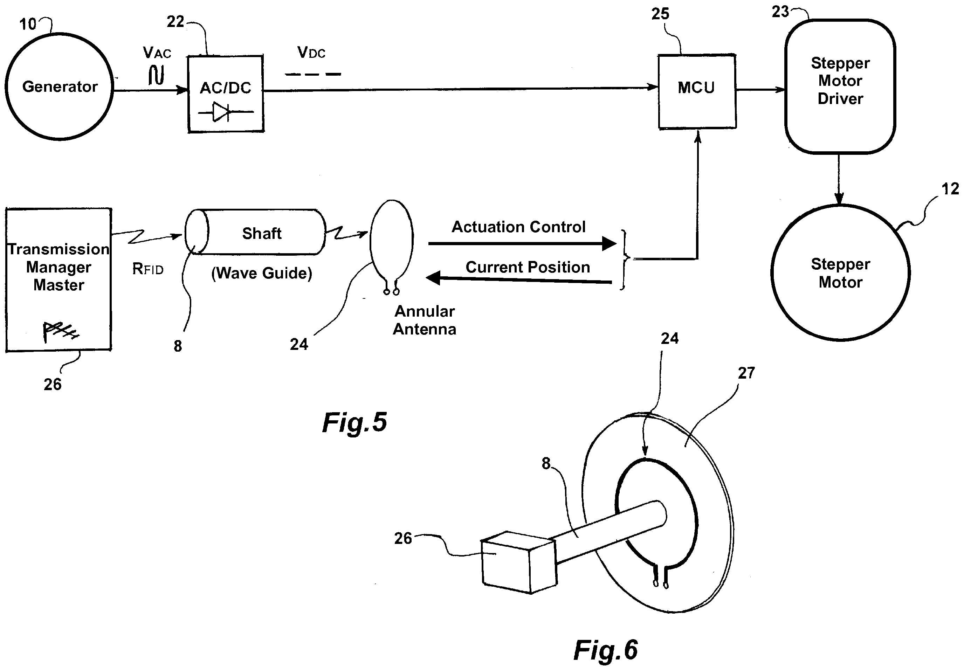

The scheme therewith the signal is transmitted is described by referring to figure 5.

Such scheme comprises the above-described power supply winding 10 which, by exploiting the variation in the magnetic field generated by the rotation of the system integral with the shaft 8, generates an alternating voltage used for the power supply of the printed circuit board. It is to be noted then that the energy necessary to the operation of the control unit comes from rotating elements of the device, and not from outside.

To this regard, on the board 11 an AC/DC converter 22 is implemented to convert the alternating voltage generated by the winding 10 into an adjusted direct voltage, used for the power supply of the printed circuit board 11.

Furthermore, the control unit comprises a driver 23 for driving the stator 13 of the motor 12 and an annular antenna 24, apt to receive signals of electromagnetic type, which is necessary to receive the controls from a system for managing the outer transmission.

The antenna 24 for example could work in the field of the microwaves, or in the one of the radiofrequencies.

In the control unit, a microcontroller 25 receives from the annular antenna 24 the control coming from an outer control unit, that is a master for managing the transmission 26 in the present example, and it manages the driver 23 of the stepping motor 12, to control the controlled rotation of the rotor 14.

In this scheme, the master for managing the transmission 26 sends the request for actuating the synchronizer by means of electromagnetic signal, with a suitable antenna, conveniently with circular shape, having arranged in axis the axial projection of the rotating shaft 8.

The annular antenna 24, which in specific applications can be more than one, is arranged so as to surround the rotating shaft 8 and it is arranged on a support 27, which in the present case is also that of the printed circuit board 11 which rotates together with the rotating shaft and which then makes it integral therewith (figure 6) .

In the present example, the control unit, that is the microcontroller 25, receives the control signal, or any other type of signal, from the annular antenna 26, by feeding from the generator 10, and by means of the driver 23 controls a certain rotation of the rotor 14 of the motor 12.

It is to be meant that the control unit is also capable of communicating to the Master 26 the status and/or the position related to the shaft 8 of the rotor 14. Generally, the so-implemented communication is of two-way type, by always using the rotating shaft 8 as wave guide.

In order to implement this, preferably both the receiving annular antenna 24, connected to a control and power supply unit, and the transmitting annular antenna are annular, circular and arranged so as to be coaxial to the respective rotating shaft and to the axial projection thereof, respectively.

It is meant however that, so that the shaft acts as wave guide, it can be sufficient that the receiving annular antenna 24 surrounds at least partially the shaft, without it is necessarily coaxial thereto and circular.

Likewise, the transmitting antenna could be not annular or it could be sufficient that it surrounds at least partially the axial projection of the shaft, without it necessarily is coaxial thereto and circular.

Even the power supply of the boards 11 is possible thanks to the rotation of the winding 10 which links together with the magnetic field generated by one or more magnets 9 assemble on the carter 21. However, even other power supply systems, for example with battery, can be possible.

Therefore, the herein described communication system generally is constituted by:
- a Master control unit emitting, by means of an antenna, which preferably is annular, circular and centred with respect to a rotating shaft, that is symmetrical and coaxial thereto, an electromagnetic signal towards a receiving antenna - the transmitting antenna can be fixed with respect to the rotating shaft;
- a rotating shaft, in this case a crankshaft, having the function of waveguide conveying the electromagnetic field generated by the Master central unit towards the receiving antenna - it is to be noted that the waveguide function is not invalidated by the rotation of the shaft;
- an annular receiving antenna, preferably with circular shape but however centred with respect to the reference rotating shaft and then coaxial thereto - such antenna is integral with the rotating shaft and it is dragged therefrom in rotation; and
- one or more Slave systems which are integral with the rotating shaft and dragged thereby in rotation: in the present case constituted by a control and power supply unit implemented on the board 11.

By exploiting the transmission of electromagnetic radio signals one succeeds then to communicate with an electronic system integral with a rotating shaft. The crankshaft plays the function of waveguide from the stator Master electronic system, integral with the carter, to the rotating electronic system and vice versa.

It is to be meant however that the fixed transmitting antenna, since it has not to rotate, could be a conventional antenna, not necessarily an annular one.

The antenna coaxial to the crankshaft is crossed by the electromagnetic field by obtaining with this system a high ratio between signal and noise.

This new type of transmission system makes even possible, on the receiving annular antenna, to produce, by simple electromagnetic induction, a weak current but sufficient to power supply a chip slave even in absence of voltage outgoing from the feeder. In this case the annular antenna can operate in passive way, as it happens for the RFID tags.

However, the communication can be bi-directional and the control unit can send status signals and in case even pre-set actuation controls from the slave to the master.

Furthermore, a master has the possibility of communicating to one or more slave, connected to a single antenna or each one having a receiving antenna as described above, by using one single rotating shaft as waveguide or, in more complex systems, by using several rotating shafts to this purpose, as for example it can happen in a complex operating machine. The plurality of antennas then can be connected to respective control units or to a single control unit for managing several actuation systems.

It is to be meant that the communication system described above in the field of a synchronizer can be applied to any kind of rotating shaft device. A not exhaustive list could include operating machines of any kind, internal combustion engines with pistons or rotating ones, turbines, pumps, fans, both centrifugal and axial aero generators, propeller systems, machine tools, speed transmissions, synchronizer, friction clutches and so on, that is any time that a rotating shaft drags in rotation a mechanism which has to be actuated in reply to a signal, and any time a status signal has to cover the reverse route.

Furthermore, it is to be meant that what said for actuation means comprising motors of rotary type is valid also for motors of linear type.

To the above-described rotating shaft device a person skilled in the art, with the purpose of satisfying additional and contingent needs, could introduce several modifications and variants, all however comprised in the protective field of the present invention, as defined by the enclosed claims.

## Claims

1. A rotating shaft device comprising a fixed carter (21) and driving means integral to at least one of one or more rotating shafts (8) of the rotating shaft device, each driving means having its own integrated control and power supply unit (11, 25), **characterized in that** it comprises:
• one or more annular antennas (24), connected to said respective control and power supply unit (11, 25) and arranged so as to at least partially surround one or more of said rotating shafts (8), and integral to the rotating shaft (8) of the respective control and power supply unit (11, 25), so that said rotating shafts (8) act as wave guide for the signals received from said one or more annular antennas (24) and intended to be received by the respective control and power supply unit (11, 25) to drive said driving means associated thereto; and
• radio transmission means (26), integral with the carter (21) and associated to one or more of said rotating shafts (8) to send signals therethrough to said one or more annular antennas (24).

2. The rotating shaft device according to claim 1, wherein the annular antennas (24) wholly surround the respective rotating shaft (8).

3. The rotating shaft device according to claim 1 or 2, wherein the annular antenna (24) is circular.

4. The rotating shaft device according to claims 2 and 3, wherein the annular antenna (24) is arranged so as to be coaxial to the respective rotating shaft (8).

5. The rotating shaft device according to anyone of the previous claims, wherein the radio transmission means (26), integral with the carter (21), comprises an annular transmitting antenna surrounding at least partially the axial projection of a respective rotating shaft (8).

6. The rotating shaft device according to claim 5, wherein the annular transmitting antenna wholly surrounds the axial projection of the respective rotating shaft (8) .

7. The rotating shaft device according to claim 5 or 6, wherein the annular transmitting antenna is circular.

8. The rotating shaft device according to claims 6 and 7, wherein the annular transmitting antenna is arranged so as to be coaxial to a respective rotating shaft (8).

9. The rotating shaft device according to claim 1, wherein the annular antennas (24) connected to a respective control and power supply unit (11, 25) are of passive type.

10. The rotating shaft device according to anyone of the previous claims, wherein on the carter (21) a plurality of magnets (9), of permanent type, is provided, radially positioned with respect to the driving axle, the device comprising electrical windings (10), integral with a respective rotating shaft (8), connected to said control and power supply unit (11, 25) for the power supply thereof.

11. The rotating shaft device according to claim 10, comprising an electric motor (12) integral with a respective rotating shaft (8), having a stator (13) and a rotor (14) which are portions of said driving means.

12. The rotating shaft device according to claim 11, wherein the electric motor (12) is supplied by said windings (10).

13. The rotating shaft device according to claim 12, wherein the control and power supply unit (11, 25) comprises an AC/DC converter.

14. The rotating shaft device according to anyone of the previous claims, wherein the device is an actuated synchronizer (20).

## Patentansprüche

1. Eine Drehwellenvorrichtung aufweisend ein festes Gehäuse (21) und Antriebsmittel, die mit zumindest einem oder mehreren Drehwellen (8) der Drehwellenvorrichtung einstückig ausgebildet sind, wobei jedes Antriebsmittel eine eigene integrierte Steuerungs- und Energieversorgungseinheit (11, 25) aufweist, **dadurch gekennzeichnet, dass** sie Folgendes umfasst:
• eine oder mehrere ringförmige Antennen (24), die mit der besagten entsprechenden Steuerungs- und Energieversorgungseinheit (11, 25) verbunden und so angeordnet sind, dass sie eine oder mehrere der besagten Drehwellen (8) zumindest teilweise umgeben und mit der Drehwelle (8) der entsprechenden Steuerungs- und Energieversorgungseinheit (11, 25) einstückig ausgebildet sind, so dass die besagten Drehwellen (8) als Wellenleiter für die von der einen oder mehreren besagten ringförmigen Antennen (24) empfangenen und von der entsprechenden Steuerungs- und Energieversorgungseinheit (11, 25) zu empfangenden Signalen fungieren, um die besagten hierzu zugeordneten Antriebsmittel anzutreiben; und
• Funkübertragungsmittel (26), die einstückig mit dem Gehäuse (21) ausgebildet und einer oder mehreren der besagten Drehwellen (8) zugeordnet sind, um Signale durch diese hindurch zu einer oder mehreren ringförmigen Antennen (24) zu senden.

2. Die Drehwellenvorrichtung nach Anspruch 1, wobei die ringförmigen Antennen (24) die entsprechende Drehwelle (8) ganz umschließen.

3. Die Drehwellenvorrichtung nach Anspruch 1 oder 2, wobei die ringförmige Antenne (24) kreisförmig ist.

4. Die Drehwellenvorrichtung nach Anspruch 2 bis 3, wobei die ringförmige Antenne (24) so angeordnet ist, dass sie koaxial zur entsprechenden Drehwelle (8) ist.

5. Die Drehwellenvorrichtung nach irgendeinem der vorgehenden Ansprüche, wobei das mit dem Gehäuse (21) einstückig ausgebildete Funkübertragungsmittel (26) eine ringförmige Sendeantenne umfasst, die den axialen Vorsprung einer entsprechenden Drehwelle (8) zumindest teilweise umschließt.

6. Die Drehwellenvorrichtung nach Anspruch 5, wobei die ringförmige Sendeantenne den axialen Vorsprung der entsprechenden Drehwelle (8) ganz umschließt.

7. Die Drehwellenvorrichtung nach Anspruch 5 oder 6, wobei die ringförmige Sendeantenne kreisförmig ist.

8. Die Drehwellenvorrichtung nach Anspruch 6 und 7, wobei die ringförmige Sendeantenne so angeordnet ist, dass sie koaxial zu einer entsprechenden Drehwelle (8) ist.

9. Die Drehwellenvorrichtung nach Anspruch 1, wobei die mit einer entsprechenden Steuerungs- und Energieversorgungseinheit (11, 25) verbundenen ringförmigen Antennen (24) vom passiven Typ sind.

10. Die Drehwellenvorrichtung nach irgendeinem der vorgehenden Ansprüche, wobei auf dem Gehäuse (21) eine Vielzahl von radial zur Antriebsachse positionierten Permanentmagneten (9) angeordnet sind; die Vorrichtung elektrische Wicklungen (10) aufweist, die mit einer entsprechenden Drehwelle (8) einstückig ausgebildet sind, welche mit der besagten Steuerungs- und Energieversorgungseinheit (11, 25) zu deren Stromversorgung verbunden sind.

11. Die Drehwellenvorrichtung nach Anspruch 10, umfassend einen elektrischen Motor (12), der mit einer entsprechenden Drehwelle (8) einstückig ausgebildet ist und einen Stator (13) und einen Rotor (14) aufweist, die Teile der besagten Antriebsmittel sind.

12. Die Drehwellenvorrichtung nach Anspruch 11, wobei der elektrische Motor (12) über die besagten Wicklungen (10) versorgt wird.

13. Die Drehwellenvorrichtung nach Anspruch 12, wobei die Steuerungs- und Energieversorgungseinheit (11, 25) einen AC/DC-Wandler umfasst.

14. Die Drehwellenvorrichtung nach irgendeinem der vorgehenden Ansprüche, wobei die Vorrichtung eine betätigte Synchronisiervorrichtung (20) ist.

## Revendications

1. Dispositif d'arbre en rotation comprenant un carter fixé (21) et des moyens d'entraînement intégrés à au moins un parmi un ou plusieurs arbres en rotation (8) du dispositif d'arbre en rotation, chaque moyen d'entraînement ayant sa propre unité de contrôle et d'alimentation respective (11, 25), **caractérisé en ce qu'**il comprend :
• une o plusieurs antennes annulaires (24), reliées à ladite unité de contrôle et d'alimentation respective (11, 25) et disposées de façon à entourer au moins un ou plusieurs desdits arbres en rotation (8), et intégrées à l'arbre en rotation (8) de l'unité de contrôle et d'alimentation respective (11, 25), de sorte que lesdits arbres en rotation (8) agissent comme guide d'ondes pour les signaux reçus depuis une o plusieurs antennes annulaires (24) et destinés à être reçus par l'unité de contrôle et d'alimentation respective (11, 25) afin d'actionner ledit moyen d'entraînement associé à celle-ci ; et
• moyens de transmission radio (26), intégrés au carter (21) et associés à un ou plusieurs desdits arbres en rotation (8) pour envoyer des signaux à travers ceux-ci à une o plusieurs antennes annulaires (24).

2. Dispositif d'arbre en rotation selon la revendication 1, dans lequel les antennes annulaires (24) entourent totalement l'arbre en rotation respectif (8).

3. Dispositif d'arbre en rotation selon la revendication 1 ou 2, dans lequel l'antenne annulaire (24) est circulaire.

4. Dispositif d'arbre en rotation selon les revendications 2 et 3, dans lequel l'antenne annulaire (24) est disposée de manière à être coaxiale à l'arbre en rotation respectif (8).

5. Dispositif d'arbre en rotation selon l'une quelconque des revendications précédentes, dans lequel le moyen de transmission radio (26), intégré au carter (21), comprend l'antenne annulaire en transmission qui entoure au moins partiellement la projection axiale d'un arbre en rotation respectif (8).

6. Dispositif d'arbre en rotation selon la revendication 5, dans lequel l'antenne annulaire en transmission entoure totalement la projection axiale de l'arbre en rotation respectif (8).

7. Dispositif d'arbre en rotation selon la revendication 5 ou 6, dans lequel l'antenne annulaire en transmission est circulaire.

8. Dispositif d'arbre en rotation selon les revendications 6 et 7, dans lequel l'antenne annulaire en transmission est disposée de manière à être coaxiale à un arbre en rotation respectif (8).

9. Dispositif d'arbre en rotation selon la revendication 1, dans lequel les antennes annulaires (24) reliées à une unité de contrôle et d'alimentation respective (11, 25) sont du type passif.

10. Dispositif d'arbre en rotation selon l'une quelconque des revendications précédentes, dans lequel sur le carter (21) une pluralité d'aimants (9), de type permanent, est fournie, positionnés radialement par rapport à l'essieu moteur, le dispositif comprenant bobinages électriques (10), intégrés à l'arbre en rotation respectif (8), relié à ladite unité de contrôle et d'alimentation (11, 25) pour son alimentation électrique.

11. Dispositif d'arbre en rotation selon la revendication 10, comprenant un moteur électrique (12) intégré à l'arbre en rotation respectif (8), ayant un stator (13) et un rotor (14) qui sont des parties dudit moyen d'entraînement.

12. Dispositif d'arbre en rotation selon la revendication 11, dans lequel le moteur électrique (12) est fourni par lesdits bobinages (10).

13. Dispositif d'arbre en rotation selon la revendication 12, dans lequel l'unité de contrôle et d'alimentation (11, 25) comprend un convertisseur CA/CC.

14. Dispositif d'arbre en rotation selon l'une quelconque des revendications précédentes, dans lequel le dispositif est un synchronisateur actionné (20).
